# EUROPÄISCHE PATENTSCHRIFT

(11) **EP 0 889 260 B1**
(45) Veröffentlichungstag und Bekanntmachung des Hinweises auf die Patenterteilung: **19.12.2001**
(21) Anmeldenummer: 98111926.6
(22) Anmeldetag: 27.06.1998
(51) Int. Cl.: F16H 37/08

(54) **Stufenloses Getriebe**
Continuously variable transmission
Transmission à variation continue

(30) Priorität: 04.07.1997 DE 19728610
(43) Veröffentlichungstag der Anmeldung: 07.01.1999
(73) Patentinhaber: ZF FRIEDRICHSHAFEN Aktiengesellschaft, 88038 Friedrichshafen (DE)
(72) Erfinder: Sich, Bernhard, 88045 Friedrichshafen (DE)

(56) Entgegenhaltungen:
- EP-A- 0 308 078
- EP-A- 0 748 954
- WO-A-95/14183
- WO-A-99/01681
- DE-A- 4 308 761
- GB-A- 2 277 133
- US-A- 4 290 320

## Beschreibung

Die Erfindung betrifft ein stufenloses Getriebe mit den Merkmalen nach dem Oberbegriff des Anspruchs 1.

Ein gattungsgemäßes stufenloses Getriebe ist in der US-Patentschrift 3 340 749 beschrieben. Dieses stufenlose Getriebe ist ein Leistungsverzweigungsgetriebe mit drei Fahrbereichen, mit einem als Umschlingungsgetriebe ausgebildeten Variator und zwei mechanischen Leistungszweigen. Über Kupplungen kann wahlweise ein mechanischer Leistungszweig trieblich mit der Antriebswelle verbunden werden. Der geschaltete mechanische Leistungszweig und der Leistungszweig mit stufenlos regelbarer Drehzahl des Umschlingungsgetriebes werden in einem als Summierungsgetriebe wirkenden Planetengetriebe zusammengeführt. Bei einem weiteren Fahrbereich werden beide mechanischen Leistungszweige trieblich von der Antriebswelle entkoppelt und mit einer weiteren Kupplung die Welle des Sekundärkegelscheibenpaares des Umschlingungsgetriebes direkt mit der Abtriebswelle verbunden. Damit wird die gesamte Leistung über das Umschlingungsgetriebe auf die Abtriebswelle übertragen.

Bei derartigen Getrieben wird bei Stillstand des Fahrzeuges der Variator in der Regel derart eingestellt, daß im Fahrbereich der langsamsten Geschwindigkeiten bei endlicher Getriebeeingangsdrehzahl die Getriebeausgangsdrehzahl Null ist. Zum Anfahren wird noch im Stillstand die Kupplung dieses langsamsten Fahrbereichs geschlossen. Der Anfahrvorgang erfolgt durch Verstellen des Variators. Damit erhöht sich im Summierungsgetriebe die Getriebeausgangsdrehzahl. Eine geringfügige Verstellung des Variators hat eine deutliche Änderung der Gesamtübersetzung zur Folge. Dadurch gestaltet sich ein geregeltes Anfahren äußerst schwierig. Insbesondere ein behutsames Rangieren ist regelungstechnisch kaum zu meistern. In diesem Bereich sehr geringer Getriebeausgangsdrehzahlen bei endlichen Getriebeeingangsdrehzahlen ist das Drehmoment am Variator deutlich höher als das Drehmoment am Getriebeausgang. Der Variator wird damit mit einem sehr hohen Drehmoment belastet, mit einem deutlich höheren Drehmoment als bei direktem Antrieb über den Variator ohne Leistungsverzweigung.

Diese schwierige Regelbarkeit des Getriebes beim Anfahren und die hohe Drehmomentbelastung des Variators stellen einen erheblichen Nachteil dar.

Der Erfindung liegt die Aufgabe zugrunde, ein stufenloses Getriebe zu schaffen, bei dem das Anfahren und Reversieren leicht zu regeln ist und die maximale Drehmomentüberhöhung am Variator im Zustand der stehenden Getriebeausgangswelle bei endlichen Getriebeeingangsdrehzahlen zu vermeiden.

Diese Aufgabe wird mit einem, auch die kennzeichnenden Merkmale des Hauptanspruchs aufweisenden, gattungsgemäßen stufenlosen Getriebe gelöst.

Das erfindungsgemäße stufenlose Getriebe ist ein Leistungsverzweigungsgetriebe mit einem Leistungszweig mit stufenlos regelbarer Drehzahl in Form eines Variators und mit einem mechanischen Leistungszweig. Es weist zwei Fahrbereiche auf. Im ersten Fahrbereich wird der mechanische Leistungszweig über eine Kupplung K1 mit einem als Summierungsgetriebe wirkenden Planetengetriebe trieblich verbunden. Die Sekundärseite des Variators ist fest mit dem Summierungsgetriebe verbunden. In dem zweiten Fahrbereich verbindet eine Kupplung K2 bei geöffneter Kupplung K1, d. h. bei offenem mechanischen Leistungszweig den Ausgang des Variators mit dem Ausgang des Planetengetriebes. Die beiden durch die Kupplungen K1 und K2 schaltbaren Fahrbereiche können wahlweise über eine Kupplung K_{V} für Vorwärtsfahrt und über eine Kupplung K_{R} für Rückwärtsfahrt mit der Getriebeantriebswelle verbunden werden. Diese Kupplungen K_{V} und K_{R} dienen als Anfahrkupplungen und als Reversiereinheit. Kupplungen als Anfahrelemente sind leicht zu regeln. Zur Regelung von Kupplungen kann auf einen reichen Erfahrungsschatz zurückgegriffen werden. Auch Überschneidungssteuerungen, insbesondere zum Reversieren sind gut ausgereift. Ein behutsames Rangieren mit dem bewährten Konzept geregelter Anfahr- und Reversierkupplungen ist regelungstechnisch unproblematisch. Die technischen Probleme der Anfahrregelung diese Leistungsverzweigungsgetriebe aus dem Stillstand durch Änderung der Variatoreinstellung sind damit beseitigt. Nach der Erfindung sind die Kupplungen K_{V} und K_{R} als Doppelkupplung ausgebildet. Sie sind dem Variator und dem mechanischen Leistungszweig vorgestellt angeordnet.

Der Variator ist vorteilhafterweise als Umschlingungsgetriebe ausgebildet. In einer anderen vorteilhaften Ausgestaltung der Erfindung ist der Variator als Reibradgetriebe ausgebildet. Zwischen einerseits der Anfahr- und Reversiereinheit aus den Kupplungen K_{V} und K_{R} und andererseits dem den Variator und den mechanischen Leistungszweig beinhältenden Getriebeteil ist vorzugsweise eine Kriechganggruppe in Vorgelegebauweise angeordnet. Dieses Getriebe kommt vorteilhaft in land- und forstwirtschaftlichen Nutzfahrzeugen zur Anwendung.

Die Übersetzung ist derart ausgelegt, daß der Gesamtgetriebewirkungsgrad im am häufigsten benutzten Geschwindigkeits- und Zugkraftbereich optimal ist. Die Getriebespreizung im Fahrbereich mit Leistungsverzweigung ist größer als die Variatorspreizung. Dank der hohen Getriebespreizung sind zwei Fahrbereiche des stufenlosen Getriebes vollends ausreichend. Das Getriebe kann damit sehr einfach aufgebaut werden. Gegenüber Getrieben mit mehr Fahrbereichen können viele Bauteile für Verzahnungen, Kupplungen etc. eingespart werden. Dabei ist die Getriebeübersetzung derart ausgelegt, daß das auf den Variator wirkende maximale Drehmoment durch die Schlupfgrenze zwischen Reifen und Untergrund bzw. Fahrbahn begrenzt ist. Damit wird eine Überlastung des Variators vermieden.

Der Umschaltpunkt, an dem die Kupplung K1 geschlossen und die Kupplung K2 geöffnet wird bzw. umgekehrt, ist verteilhaft derart gewählt, daß Sonnenrad, Hohlrad und Planetenträger des Summierungs-Planetengetriebes synchron umlaufen. Damit wird ein Zugkrafteinbruch oder eine Unterbrechung der Zugkraft verhindert.

Um das Problem der schwierigen Regelbarkeit und der großen Drehmomentüberhöhung zu vermeiden wird das Verhältnis von Getriebeabtriebsdrehzahl zu Antriebsdrehzahl der Vorgelegewelle bei endlicher Antriebsdrehzahl in einem vorteilhaften Verfahren größer als ein vorgegebener Minimalwert gewählt.

Das Anfahren und Reversieren ist beispielsweise ein häufiger Betriebszustand von landwirtschaftlichen Nutzfahrzeugen bei Arbeitseinsätzen wie Laden oder Stapeln. Ein ruppiges, sprunghaftes Anfahren und Reversieren mit unpräzis vorbestimmbaren Endlagen der Bewegung des Fahrzeuges, wie es bei Anfahrregelungen durch Hochregeln der Getriebeabtriebsdrehzahl von Null beginnend durch Verstellen des Variators vorkommen kann, kann zu Gefahrensituationen führen und ist damit untolerierbar. Das Anfahren erfolgt deshalb vorteilhaft durch geregeltes Schließen der Kupplung K_{V} bzw. K_{R}, das Reversieren durch eine geregelte Überschneidungsschaltung der Kupplungen K_{V} und K_{R}.

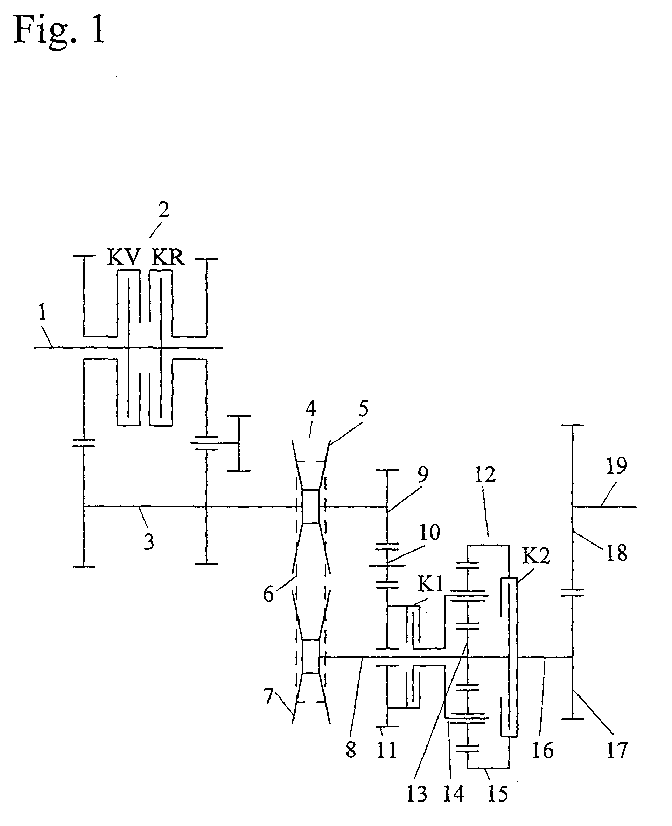

In einer Zeichnung ist ein Ausführungsbeispiel der Erfindung dargestellt.
- Die Figur: zeigt ein Leistungsverzweigungsgetriebe mit einer Doppelkupplung als Anfahr- und Reversiereinheit.

Ein nicht dargestellter Motor treibt das stufenlose Getriebe über eine Antriebswelle 1 an. Diese kann mit einer Doppelkupplung 2, die aus einer Kupplung K_{V} für Vorwärtsfahrt und einer Kupplung K_{R} für Rückwärtsfahrt besteht, über Stirnräder mit einer Vorgelegewelle 3 trieblich verbunden werden. Diese Vorgelegewelle 3 treibt ein Leistungsverzweigungsgetriebe mit einem Leistungszweig mit stufenlos regelbarer Drehzahl in Form eines Variators und mit einem mechanischen Leistungszweig an. Der Variator ist als Umschlingungsgetriebe 4 ausgebildet, das aus einem Primärkegelscheibenpaar 5, einem Umschlingungsorgan 6 und einem Sekundärkegelscheibenpaar 7 besteht. Das Primärkegelscheibenpaar 5 ist verdrehfest auf der Vorgelegewelle 3 montiert, das Sekundärkegelscheibenpaar 7 auf einer Zwischenwelle 8. Ebenfalls mit der Vorgelegewelle 3 fest verbunden ist ein Stirnrad 9, das über ein Stirnrad 10 ein zur Zwischenwelle 8 koaxiales Losrad 11 treibt. Diese drei Zahnräder 9, 10, 11 bilden den mechanischen Leistungszweig des Leistungsverzweigungsgetriebes. Diese beiden Leistungszweige können in einem als Planetengetriebe 12 ausgebildeten Summierungsgetriebe wieder zusammengeführt werden. Das Sonnenrad 13 des Planetengetriebes 12 ist fest auf der Zwischenwelle 8 angebracht. Der Planetenträger 14 des Planetengetriebes 12 kann über eine Kupplung K1 mit dem Losrad 11 trieblich verbunden werden. Das Hohlrad 15 des Planetengetriebes 12 ist mit einer weiteren Zwischenwelle 16 über die Sekundärseite einer Kupplung K2 verbunden. Die Primärseite dieser Kupplung K2 ist auf der Zwischenwelle 8 angebracht. Damit können bei geöffneter Kupplung K1 die beiden Zwischenwellen 8 und 16 im direkten Durchtrieb verbunden werden. Die Zwischenwelle 16 treibt über zwei Stirnräder 17, 18 die Abtriebswelle 19 des Getriebes.

Das Anfahren und Beschleunigen mit diesem stufenlosen Getriebe gestaltet sich folgendermaßen: Die Motordrehzahl wird auf einen vorgegebenen, verbrauchsoptimierten Wert eingestellt. Das Umschlingungsgetriebe 4 wird auf seine maximale Übersetzung eingestellt. Die Kupplung K1 ist geschlossen und die Kupplung K2 offen. Je nach Fahrrichtung wird die Kupplung K_{V} für Vorwärtsfahrt oder Kupplung K_{R} für Rückwärtsfahrt mit Kraft beaufschlagt. Die maximale Übersetzung des Umschlingungsgetriebes 4 ist gerade so bemessen, daß bei geschlossender Kupplung und vorgegebener Motordrehzahl die Getriebeabtriebsdrehzahl einen geringen Wert aufweist. Dieser Wert liegt aber außerhalb des kritischen Bereichs um Null herum, in dem bei Leistungsverzweigungsgetrieben die Getriebeabtriebsdrehzahl sich schon bei minimalen Übersetzungsänderungen des Umschlingungsgetriebes prozentual sehr deutlich verändert. Das Sonnenrad 13 des Planetengetriebes 12 dreht dabei schneller als der Planetenträger 14, so daß sich die Planeten in zum Sonnenrad bzw. Planetenträger entgegengesetzer Richtung drehen. Die maximale Übersetzung des Umschlingungsgetriebes 4 und damit die Drehzahl des Sonnenrades 13 im Vergleich zu der des Planetenträgers 14 ist dabei - wie gesagt - so gewählt, daß sich das Hohlrad 15 sehr langsam in Richtung von Sonnenrad 13 und Planetenträger 14 dreht. Sobald beim Anfahrvorgang die Kupplung nicht mehr rutscht, wird die Übersetzung des Umschlingungsgetriebes 4 verkleinert. Damit verringert sich die Drehzahl des Sonnenrades 13, womit der Rückwärtslauf der Planetenräder verlangsamt wird. Dadurch erhöht sich die Drehzahl des Hohlrades 15, da die Umlaufgeschwindigkeit des Planetenträgers 14 konstant ist. Bei der mimimalen Übersetzung des Umschlingungsgetriebes 4 dreht sich das Sonnenrad 13 und der Planetenträger 14 genau gleich schnell. Die Planetenräder stehen dabei still und das Hohlrad 15 dreht sich somit gleich schnell wie das Sonnenrad 13 und der Planetenträger 14, d. h. das Planetengetriebe 12 läuft als Block um. Dies ist die Bereichsgrenze des ersten Bereich des Getriebes, des Bereichs mit Leistungsverzweigung. Jetzt wird die Kupplung K1 geöffnet und die Kupplung K2 geschlossen. Der mechanische Leistungszweig ist damit nicht mehr trieblich mit dem Summierungsplanetengetriebe verbunden, d. h. die Stirnräder 9, 10 und 11 laufen lose mit. Die Kupplung K2 verbindet die Zwischenwellen 8 und 16 im direkten Durchtrieb. Der gesamte Leistungsfluß strömt über das Umschlingungsgetriebe 4. Das Übersetzungsverhältnis des Umschlingungsgetriebes 4 wird jetzt in diesem zweiten Bereich des Getriebes zur weiteren Beschleunigung von seinem minimalen Wert beginnend vergrößert. Findet dieses Getriebe Anwendung in landwirtschaftlichen Nutzfahrzeugen, so wird die Übersetzung sinnvollerweise so bemessen, daß der erste Bereich zum Fahren im Gelände (Ackergruppe) und der zweite zum Befahren von Zufahrtsstraßen (Straßengruppe) dient. Im ersten Getriebebereich (Ackergruppe), dem Bereich mit Leistungsverzweigung, ist für geringe Fahrgeschwindigkeiten die über das Umschlingungsgetriebe 4 zu übertragende Leistung größer als die gesamte Antriebsleistung. Dies ist der Bereich der sogenannten Blindleistung, die das Umschlingungsgetriebe 4 sehr belastet. Das Umschlingungsgetriebe 4 müßte demnach sehr stark bemessen aufgebaut sein. Das gesamte Getriebe ist aber erfindungsgemäß gerade derart ausgelegt, daß die Triebkraft der Antriebsräder in diesem Bereich der Blindleistung höher ist als die Haftreibungskraft. Damit limitiert die Haftreibungsgrenze zum Schlupfen der Räder die im Umschlingungsgetriebe 4 auftretende Blindleistung in der Weise, daß das Umschlingungsgetriebe 4 noch maßvoll dimensioniert werden kann. Die am häufigsten vorkommenden Fahrgeschwindigkeiten in der Ackergruppe liegen bei dieser Getriebedimensionierung gerade in einem Bereich, in dem der mechanische Zweig den größeren Anteil der Antriebsleistung überträgt. Da der mechanische Zweig im Vergleich zum Umschlingungsgetriebe 4 den besseren Wirkungsgrad aufweist, ist der Gesamtwirkungsgrad des Getriebes damit in diesem häufig angeforderten Geschwindigkeitsbereich sehr günstig.

### Bezugszeichenliste

- K_{V}: Kupplung für Vorwärtsfahrt
- KR: Kupplung für Rückwärtsfahrt
- K1: Kupplung
- K2: Kupplung
- 1: Antriebswelle
- 2: Doppelkupplung
- 3: Vorgelegewelle
- 4: Umschlingungsgetriebe
- 5: Primärkegelscheibenpaar
- 6: Umschlingungsorgan
- 7: Sekundärkegelscheibenpaar
- 8: Zwischenwelle
- 9: Stirnrad
- 10: Stirnrad
- 11: Losrad
- 12: Planetengetriebe
- 13: Sonnenrad
- 14: Planetenträger
- 15: Hohlrad
- 16: Zwischenwelle
- 17: Stirnrad
- 18: Stirnrad
- 19: Abtriebswelle

## Patentansprüche

1. Stufenloses Getriebe mit zwei Fahrbereichen,
- mit einer Getriebeantriebswelle (1) und einer Abtriebswelle,
- einem mit der Getriebeantriebswelle (1) trieblich verbundenen Leistungszweig mit stufenlos regelbarer Drehzahl in Form eines Variators (4),
- einem mit der Getriebeantriebswelle (1) trieblich verbundenen mechanischen Leistungszweig,
- einem als Summierungsgetriebe wirkenden Planetengetriebe (12), welches zwei Eingänge und einen mit der Abtriebswelle gekoppelten Ausgang aufweist,
- und einer ersten und einer zweiten Kupplung (K1, K2) sowie einer Kupplung für Rückwärtsfahrt (K_R),
- wobei im ersten Fahrbereich der stufenlos arbeitende Leistungszweig dem einen Eingang des Planetengetriebes und der mechanische Leistungszweig über die geschlossene erste Kupplung (K1) dem anderen Eingang des Planetengetriebes zugeführt werden und die summierte Leistung an den Ausgang des Planetengetriebes weitergeleitet wird,
- wobei im zweiten Fahrbereich bei geöffneter erster Kupplung (K1) und bei geschlossener zweiter Kupplung (K2) der vom Ausgang des Variators kommende Leistungszweig mit stufenlos regelbarer Drehzahl mit dem Ausgang des Planetengetriebes (12) verbunden ist,
**dadurch gekennzeichnet, daß**
- auf der Getriebeantriebswelle (1) eine Kupplung (K_V) für Vorwärtsfahrt und die Kupplung (K_R) für Rückwärtsfahrt angeordnet sind, die in beiden schaltbaren Fahrbereichen wahlweise betätigbar sind und
- die im Antriebsstrang vor dem Variator und dem mechanischen Leistungszweig angeordneten Kupplungen für Vorwärts- und Rückwärtsfahrt (K_V, K_R) als Doppelkupplung (2) ausgebildet sind, die als Anfahrkupplung und Reversiereinheit dient.

2. Stufenloses Getriebe nach Anspruch 1, **dadurch gekennzeichnet, daß** der Variator als Umschlingungsgetriebe (4) ausgebildet ist.

3. Stufenloses Getriebe nach Anspruch 1, **dadurch gekennzeichnet, daß** der Variator als Reibradgetriebe ausgebildet ist.

4. Stufenloses Getriebe nach Anspruch 1, **dadurch gekennzeichnet, daß** zwischen einerseits der Anfahr- und Reversiereinheit aus den Kupplungen K_V und K_R und andererseits dem den Variator und den mechanischen Leistungszweig beinhaltenden Getriebeteil eine Kriechganggruppe in Vorgelegebauweise angeordnet ist.

5. Stufenloses Getriebe nach Anspruch 1, **dadurch gekennzeichnet, daß** es in land- und forstwirtschaftlichen Nutzfahrzeugen zur Anwendung kommt.

6. Stufenloses Getriebe nach Anspruch 1, **dadurch gekennzeichnet, daß** die Übersetzung derart ausgelegt ist, daß der Gesamtgetriebewirkungsgrad im am häufigsten benutzten Geschwindigkeits- und Zugkraftbereich optimal ist.

7. Stufenloses Getriebe nach Anspruch 1, **dadurch gekennzeichnet, daß** die Getriebespreizung im Fahrbereich mit Leistungsverzweigung größer ist als die Variatorspreizung.

8. Stufenloses Getriebe nach Anspruch 1, **dadurch gekennzeichnet, daß** die Getriebeübersetzung derart ausgelegt ist, daß das auf den Variator wirkende maximale Drehmoment durch die Schlupfgrenze zwischen Reifen und Untergrund bzw. Fahrbahn begrenzt ist.

9. Verfahren zum Betrieb eines stufenlosen Getriebes nach Anspruch 1, **dadurch gekennzeichnet, daß** am Umschaltpunkt, an dem die Kupplung K1 geschlossen und die Kupplung K2 geöffnet wird bzw. umgekehrt, Sonnenrad (13), Hohlrad (15) und Planetenträger (14) des Summierung-Planetengetriebes (12) synchron umlaufen.

10. Verfahren zum Betrieb eines stufenlosen Getriebes nach Anspruch 1, **dadurch gekennzeichnet, daß** das Verhältnis von Abtriebsdrehzahl zu Antriebsdrehzahl der Vorgelegewelle (3) bei endlicher Antriebsdrehzahl größer ist als ein vogegebener Minimalwert.

11. Verfahren zum Betrieb eines stufenlosen Getriebes nach Anspruch 1, **dadurch gekennzeichnet, daß** das Anfahren durch geregeltes Schließen der Kupplung K_V bzw. K_R erfolgt.

12. Verfahren zum Betrieb eines stufenlosen Getriebes nach Anspruch 1, **dadurch gekennzeichnet, daß** das Reversieren durch eine geregelte Überschneidungsschaltung der Kupplungen K_V und K_R erfolgt.

## Claims

1. Continuously variable transmission with two driving ranges,
- with a transmission input shaft (1) and an output shaft,
- a continuously variable-speed power transmission branch, which is in driving connection with the transmission input shaft (1), in the form of a variator (4),
- a mechanical power transmission branch in driving connection with the transmission input shaft (1),
- a planetary transmission (12) acting as compound transmission and having two inputs and one output, which is coupled to the output shaft,
- and a first and a second clutch (K1, K2) as well as a clutch (K_R) for reverse drive,
- wherein, in the first driving range, the continuously variable power transmission branch is routed to one input of the planetary transmission and the mechanical power transmission branch to the other input of the planetary transmission via the engaged first clutch (K1), and the total power is transmitted to the output of the planetary transmission,
- wherein, in the second driving range, with the first clutch (K1) disengaged and the second clutch (K2) engaged, the continuously variable-speed power transmission branch coming from the output of the variator is connected to the output of the planetary transmission (12),
**characterised in that**
- a clutch (K_V) for forward drive and the clutch (K_R) for reverse drive are disposed on the transmission input shaft (1), which clutches can optionally be operated in both engageable driving ranges, and
- the clutches (K_V, K_R) for forward and reverse drive disposed before the variator and the mechanical power transmission branch in the drive train are formed as a twin clutch (2), which serves as a starting clutch and reversing unit.

2. Continuously variable transmission according to Claim 1, **characterised in that** the variator is formed as a wraparound transmission (4).

3. Continuously variable transmission according to Claim 1, **characterised in that** the variator is formed as a friction drive.

4. Continuously variable transmission according to Claim 1, **characterised in that** a creep speed group of countershaft design is disposed between the starting and reversing unit consisting of the clutches K_V and K_R on one side and the transmission part comprising the variator and the mechanical power transmission branch on the other side.

5. Continuously variable transmission according to Claim 1, **characterised in that** it is used in commercial vehicles for agriculture and forestry.

6. Continuously variable transmission according to Claim 1, **characterised in that** the transmission ratio is selected such that the overall efficiency of the transmission is optimum in the most frequently used speed and traction range.

7. Continuously variable transmission according to Claim 1, **characterised in that** the transmission spread in the driving range with power transmission branching is greater than the variator spread.

8. Continuously variable transmission according to Claim 1, **characterised in that** the transmission ratio is selected such that the maximum torque acting on the variator is limited by the slip limit between the tyres and the ground or roadway.

9. Method for operating a continuously variable transmission according to Claim 1, **characterised in that** the sun gear (13), the ring gear (15) and the planet carrier (14) of the compound planetary transmission (12) rotate synchronously at the changeover point at which the clutch K1 is engaged and the clutch K2 is disengaged or vice versa.

10. Method for operating a continuously variable transmission according to Claim 1, **characterised in that**, given a finite input speed, the ratio of output speed to input speed of the countershaft (3) is greater than a predetermined minimum value.

11. Method for operating a continuously variable transmission according to Claim 1, **characterised in that** starting is effected by regulated engagement of the clutch K_V or K_R.

12. Method for operating a continuously variable transmission according to Claim 1, **characterised in that** reversing is effected by regulated overlap engagement of the clutches KV_and K_R.

## Revendications

1. Transmission réglable en continu avec deux régimes de conduite, comprenant :
- un arbre d'entrée de transmission (1) et un arbre côté sortie,
- une branche de puissance à vitesse de rotation réglable en continu, sous la forme d'un variateur (4), relié cinématiquement à l'arbre d'entrée de transmission (1),
- une branche de puissance mécanique reliée cinématiquement à l'arbre d'entrée de transmission (1),
- un train planétaire (12) jouant le rôle d'un mécanisme additionneur, qui comporte deux entrées et une sortie accouplée à l'arbre de sortie,
- et un premier et un deuxième embrayage (K1, K2) ainsi qu'un embrayage pour la marche arrière (K_R),
- dans laquelle, dans le premier régime de conduite, la branche de puissance travaillant avec un réglage en continu est reliée à une des entrées du train planétaire et la branche de puissance mécanique est reliée à l'autre entrée du train planétaire à travers le premier embrayage (K1) embrayé, et la puissance accumulée est transmise à la sortie du train planétaire,
- dans laquelle, dans le deuxième régime de conduite, lorsque le premier embrayage (K1) est débrayé et que le deuxième embrayage (K2) est embrayé, la branche de puissance provenant de la sortie du variateur avec une vitesse de rotation réglable en continu est reliée à la sortie du train planétaire (12),
**caractérisée en ce que**
- sur l'arbre d'entrée (1) de la transmission, sont disposés un embrayage (K_V) pour la marche avant et l'embrayage (K_R) pour la marche arrière, qui peuvent être actionnés sélectivement dans les deux régimes de conduite commutables et,
- les embrayages pour la marche avant et pour la marche arrière (K_V et K_R) montés dans la chaîne cinématique en amont du variateur et de la branche de puissance mécanique sont réalisés sous la forme d'un embrayage double (2) qui sert d'embrayage de démarrage et d'unité d'inversion.

2. Transmission réglable en continu selon la revendication 1, **caractérisée en ce que** le variateur est constitué par une transmission à courroie (4).

3. Transmission réglable en continu selon la revendication 1, **caractérisée en ce que** le variateur est constitué par une transmission à roues de friction.

4. Transmission réglable en continu selon la revendication 1, **caractérisée en ce qu'**un groupe de vitesses tout terrain du type de construction à arbre intermédiaire est disposé entre, d'une part, l'unité de démarrage et d'inversion composée des embrayages (K_V) et (K_R) et, d'autre part, la partie de la transmission qui renferme le variateur et la branche de puissance mécanique.

5. Transmission réglable en continu selon la revendication 1, **caractérisée en ce qu'**elle est utilisée dans des véhicules utilitaires agricoles et forestiers.

6. Transmission réglable en continu selon la revendication 1, **caractérisée en ce que** le rapport est calculé de manière que le rendement global de la transmission soit optimal dans la gamme de vitesses et de forces de traction la plus fréquemment utilisée.

7. Transmission réglable en continu selon la revendication 1, **caractérisée en ce que** la plage des rapports de la transmission dans le régime de conduite avec ramification de la puissance est plus large que la plage des rapports du variateur.

8. Transmission réglable en continu selon la revendication 1, **caractérisée en ce que** le rapport de la transmission est calculé de manière que le couple maximum agissant sur le variateur soit limité par la limite de glissement entre les pneumatiques et le sol ou la chaussée.

9. Procédé d'utilisation d'une transmission réglable en continu selon la revendication 1, **caractérisé en ce que**, au point de commutation auquel le premier embrayage (K1) est embrayé et le deuxième embrayage (K2) est débrayé, ou inversement, la roue planétaire (13), la couronne à denture intérieure (15) et le porte-satellites (14) du train planétaire additionneur (12) tournent en synchronisme.

10. Procédé d'utilisation d'une transmission réglable en continu selon la revendication 1, **caractérisé en ce que** le rapport entre la vitesse de rotation de sortie et la vitesse de rotation d'entrée de l'arbre intermédiaire (3), dans le cas d'une vitesse. de rotation d'entrée finie, est plus grand qu'une valeur minimum prédéterminée.

11. Procédé d'utilisation d'une transmission réglable en continu selon la revendication 1, **caractérisé en ce que** le démarrage s'effectue par une manoeuvre d'embrayage réglée de l'embrayage (K_V) ou (K_R).

12. Procédé d'utilisation d'une transmission réglable en continu selon la revendication 1, **caractérisé en ce que** l'inversion s'effectue par un couplage à recouvrement réglé des embrayages de marche avant et de marche arrière (K_V et K_R).
